# EUROPÄISCHE PATENTSCHRIFT

(11) **EP 2 684 724 B1**
(45) Veröffentlichungstag und Bekanntmachung des Hinweises auf die Patenterteilung: **19.11.2014**
(21) Anmeldenummer: 13001182.8
(22) Anmeldetag: 09.03.2013
(51) Int. Cl.: B60K 11/04, B62D 21/02

(54) **Rahmentragstruktur mit Kühlanordnung**
Frame support structure with cooling system
Structure de support en forme de cadre avec installation de refroidissement

(30) Priorität: 13.07.2012 DE 102012013906
(43) Veröffentlichungstag der Anmeldung: 15.01.2014
(73) Patentinhaber: MAN Truck & Bus AG, 80995 München (DE)
(72) Erfinder: Sattler, Steve, 81375 München (DE); Hintereder, Jürgen, 80997 München (DE)

(56) Entgegenhaltungen:
- DE-A1- 10 006 873
- DE-A1- 19 723 230
- JP-A- H02 270 626
- US-A1- 2004 145 185
- US-A1- 2005 217 909
- US-A1- 2008 041 558

## Beschreibung

Die Erfindung betrifft eine Rahmentragstruktur für ein Nutzfahrzeug, nämlich einen Lastkraftwagen, vorzugsweise eine Sattelzugmaschine.

Rahmentragstrukturen, insbesondere Fahrgestelle, für Sattelzugmaschinen sind in den unterschiedlichsten Ausführungsformen bekannt. Die Rahmentragstrukturen sind meist leiterrahmenförmig ausgeführt und weisen zwei Längsträger und mehrere Querträger auf. Die Rahmentragstrukturen umfassen zudem üblicherweise Kühlanordnungen, die aus einer kompakten Motor- und Ladeluftkühlereinheit bestehen und frontseitig an den Rahmentragstrukturen angeordnet sind. Der frontseitig zur Verfügung stehende Raum ist relativ begrenzt. Um die Leistungsfähigkeit der Kühlanordnungen zu erhöhen, erfordern diese aber meist mehr Raum, der oft nicht ausreichend gewährt werden kann. DE 100 06 873 A1 betrifft ein Verfahren zur exakten Temperaturregelung eines für die Motorkühlung und die Beheizung eines Fahrzeuges vorgesehenen Kühlwassers, über das sowohl ein Temperaturabfall des Kühlwassers bei einer Beheizung des Fahrzeuges, als auch ein Temperaturanstieg des Kühlwassers bei verringerter Fahrgeschwindigkeit verhindert ist, indem die beiden hintereinander in den Kühlwasserkreislauf eines Verbrennungskraftmotors eingebauten Kühler bei einer Beheizung des Fahrzeuges über die elektromagnetische Zusatzsteuerung eines Bypassventils vom Kühlwasserkreislauf abgetrennt sind und der Zufluß zu den Kühlern jeweils über ein Dreiwegeventil erfolgt, über welches das Kühlwasser bei gleicher Durchflußmenge jeweils mit zunehmender Außentemperatur zunehmend über einen Kühler und abnehmend über eine am Kühler vorbeiführende Bypassleitung durch einen gemeinsamen Wärmebehälter hindurchgeleitet ist, wobei die beiden Dreiwegeventile in unmittelbarer Nähe ihres Kühlers und des Motorraumes angeordnet sind, so daß deren Umgebungstemperatur und damit auch der Durchfluß durch die Kühler hindurch bei verringerter Fahrgeschwindigkeit durch die Wärmeabgabe der Kühler und des Motorraumes erhöht wird. Die Kühler sind seitlich an dem Fahrzeug positioniert.

Lastkraftwagen mit einer erster und einer zweiter längsverlaufender Tragkonstruktion sind aus der US 2004/0145185 A und der

US 2008/0041558 A bekannt, wobei ein Motorkühler hinter den vorderen Rädern und/oder seitlich an einer der ersten und zweiten Tragkonstruktion angeordnet ist.

Eine Aufgabe der Erfindung ist es, eine verbesserte und/oder alternative Rahmentragstruktur für ein Nutzfahrzeug zu schaffen.

Diese Aufgabe kann insbesondere mit den Merkmalen des Hauptanspruchs gelöst werden. Vorteilhafte Weiterbildungen sind den Unteransprüchen zu entnehmen.

Die Erfindung schafft einen Lastkraftwagen, mit einer Rahmentragstruktur gemäß den Merkmalen des Anspruchs 1 vorzugsweise eine Sattelzugmaschine. Die Rahmentragstruktur dient vorzugsweise mitunter zum Tragen eines Fahrerhauses. Die Rahmentragstruktur umfasst eine erste längsverlaufende Tragkonstruktion und eine zweite längsverlaufende Tragkonstruktion, die in Querrichtung der Rahmentragstruktur voneinander beabstandet sind. Die Rahmentragstruktur umfasst ferner eine Kühlanordnung, die vorzugsweise einen Motorkühler und insbesondere einen Ladeluftkühler aufweist. Außerdem umfasst die Rahmentragstruktur Festmachstellen für Vorderräder des Nutzfahrzeugs, wobei die Festmachstellen Radmittelpunkte umfassen, um die die Vorderräder drehbar sind. Die Rahmentragstruktur ist vorzugsweise ferner mit einer Motoreinrichtung zum Antreiben des Nutzfahrzeugs versehen (z.B. einem Verbrennungsmotor, Dieselmotor und/oder Elektromotor).

Die Rahmentragstruktur zeichnet sich insbesondere dadurch aus, dass die Kühlanordnung in Längsrichtung der Rahmentragstruktur hinter den Radmittelpunkten der Vorderräder angeordnet ist und vorzugsweise vor Hinterrädern für das Nutzfahrzeug. Alternativ oder ergänzend zeichnet sich die Rahmentragstruktur insbesondere dadurch aus, dass die Kühlanordnung vorzugsweise außen seitlich an der Rahmentragstruktur angeordnet ist.

Die Kühlanordnung kann als kompakte, den Motorkühler und den Ladeluftkühler umfassende Baueinheit ausgeführt sein. Es ist aber ebenso möglich, dass die Kühlanordnung baulich in einen Motorkühler und einen Ladeluftkühler aufgeteilt ist, die vorzugsweise in Querrichtung und/oder in Längsrichtung der Rahmentragstruktur voneinander beabstandet sind.

Es ist möglich, dass die den Motorkühler und den Ladeluftkühler als kompakte Baueinheit umfassende Kühlanordnung seitlich außen an der ersten Tragkonstruktion oder der zweiten Tragkonstruktion angeordnet ist. Es ist ebenso möglich, dass der Motorkühler seitlich außen an der ersten Tragkonstruktion und der Ladeluftkühler seitlich außen an der zweiten Tragkonstruktion angeordnet ist. Ferner können der Motorkühler und der Ladeluftkühler seitlich außen an der ersten Tragkonstruktion oder der zweiten Tragkonstruktion angeordnet sein.

Außerdem kann die Kühlanordnung und somit der Motorkühler und/oder der Ladeluftkühler zumindest abschnittsweise seitlich neben der Motoreinrichtung angeordnet sein.

Es ist möglich, dass der Motorkühler in Längsrichtung der Rahmentragstruktur vor den Radmittelpunkten der Vorderräder angeordnet ist und der Ladeluftkühler dahinter oder umgekehrt.

Es ist möglich, dass die Kühlanordnung und somit zweckmäßig der Motorkühler und/oder der Ladeluftkühler in Längsrichtung der Rahmentragstruktur zumindest abschnittsweise hinter der Motoreinrichtung angeordnet ist.

Die Kühlanordnung, der Motorkühler und/oder der Ladeluftkühler kann z.B. mit zumindest einer Lufteintrittsdüse, vorzugsweise einer NACA-Düse, versehen werden, deren Einlassöffnung z.B. zumindest geringfügig nach vorne weisen kann, wodurch zweckmäßig eine Vergrößerung der Fahrtluftaufnahme realisiert werden kann. Alternativ oder ergänzend kann die Kühlanordnung, der Motorkühler und/oder der Ladeluftkühler eine Schrägstellung relativ zu der Längsrichtung der Rahmentragstruktur aufweisen, um wiederum zweckmäßig eine Vergrößerung der Fahrtluftaufnahme über Lufteintrittsdüsen realisieren zu können.

Dadurch, dass die Kühlanordnung von der frontseitigen Positionierung nach hinten und/oder nach seitlich außen versetzt wird, kann der frei werdende Raum anderweitig genutzt werden. Dadurch wiederum kann realisiert werden, dass der Abstand zwischen den Radmittelpunkten der Vorderräder und der Vorderkante der Rahmentragstruktur in Längsrichtung reduziert wird z.B. auf kleiner als ungefähr 1.100 mm, 1.000 mm, 900 mm, 800 mm, 700 mm oder 600 mm, was z.B. dazu führt, dass der Abstand zwischen dem Vorderrad- und Hinterradaufbau des Nutzfahrzeugs vergrößert wird, was wiederum dazu führt, dass der Wendekreis verkleinert werden kann.

Die erste Tragkonstruktion und die zweite Tragkonstruktion werden seitlich nach innen geführt, um eine verschmälerte Tragstruktur zu erzeugen, die Raum schafft, der zur Aufnahme der Kühlanordnung, des Motorkühlers und/oder des Ladeluftkühlers dient. Es ist möglich, dass die verschmälerte Tragstruktur zwischen einem Vorderradaufbau und einem Hinterradaufbau für das Nutzfahrzeuzg verläuft. Die verschmälerte Tragstruktur bildet somit vorzugsweise eine mittlere Tragstruktur. Der Vorderradaufbau umfasst Vorderräder für das Nutzfahrzeug und insbesondere Radaufhängung für selbige. Der Hinterradaufbau umfasst Hinterräder für das Nutzfahrzeug und insbesondere eine oder mehrere Hinterachsen.

Die Erfindung umfasst außerdem einen Lastkraftwagen, vorzugsweise eine Sattelzugmaschine, mit einer wie hierin beschriebenen Rahmentragstruktur.

Zu erwähnen ist noch, dass das Merkmal "zwischen" vorzugsweise so zu verstehen ist, dass es insbesondere die Positionierung in Querrichtung und/oder in Längsrichtung der Rahmentragstruktur definiert, während die Positionierung in Vertikalrichtung der Rahmentragstruktur nicht eingeschränkt wird, es sei denn, die Positionierung in Vertikalrichtung wird ausdrücklich spezifiziert.

Zu erwähnen ist ferner, dass die erfindungsgemäße Rahmentragstruktur bzw. die erste Tragkonstruktion und die zweite Tragkonstruktion insbesondere nicht auf zumindest abschnittsweise aus Tragprofilelementen (z.B. Hohl-, U-, I- oder L-Tragprofilelemente) ausgeführte (z.B. leiterrahmenförmige) Ausführungsformen beschränkt ist, sondern z.B. auch zumindest abschnittsweise monocoqueförmige oder semi-monocoqueförmige Ausführungsformen umfasst. Darunter werden insbesondere schalenförmige Strukturen verstanden, die zweckmäßig selbsttragend ausgebildet sind (z.B. aus Blech-, Tiefzieh- oder Verbundmaterial).

Die vorstehend beschriebenen Merkmale und bevorzugten Ausführungsformen der Erfindung sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsformen der Erfindung in Verbindung mit den beigefügten Figuren.
- Fig. 1: zeigt eine perspektivische Ansicht einer Rahmentragstruktur für ein Nutzfahrzeug gemäß einer Ausführungsform der Erfindung,
- Fig. 2: zeigt eine Seitenansicht der Rahmentragstruktur der Figur 1, und
- Fig. 3: zeigt eine Draufsicht auf die Rahmentragstruktur der Figuren 1 und 2, und
- Fig. 4: zeigte eine Schnittansicht der Rahmentragstruktur der Figuren 1 bis 3.

Die unter Bezugnahme auf die Figuren beschriebenen Ausführungsformen stimmen teilweise überein, wobei ähnliche oder identische Teile mit den gleichen Bezugszeichen versehen sind und zu deren Erläuterung auch auf die Beschreibung anderer Ausführungsformen oder Figuren verwiesen wird, um Wiederholungen zu vermeiden.

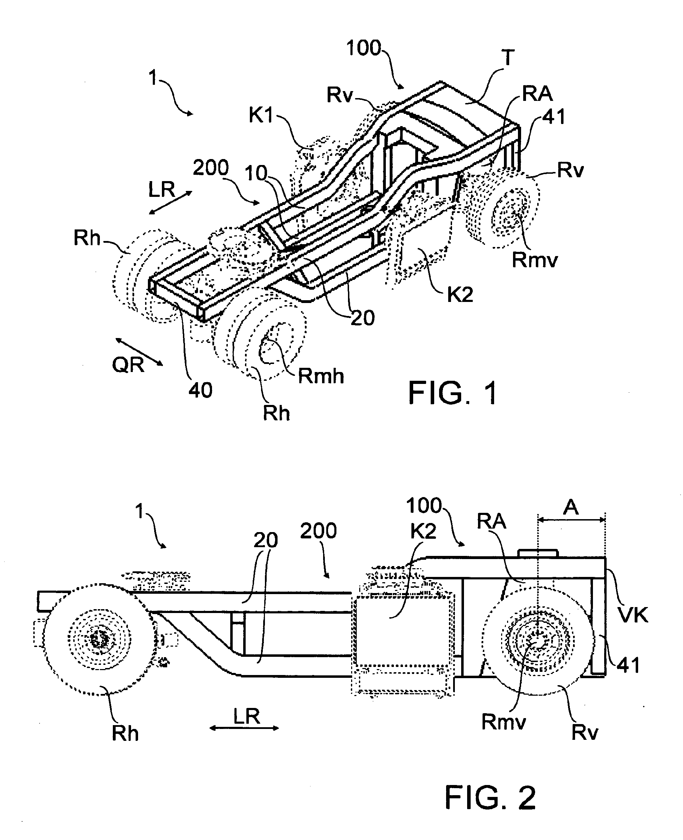

Figur 1 zeigt eine perspektivische Ansicht einer ein Fahrgestell für eine Zugmaschine (Sattelzugmaschine) bildenden Rahmentragstruktur 1, die mit einer Sattelplatte versehen ist und mitunter zum Tragen eines Fahrerhauses (nicht dargestellt) für die Zugmaschine dient.

Die Rahmentragstruktur 1 umfasst eine erste in Längsrichtung LR der Rahmentragstruktur 1 verlaufende Tragkonstruktion 10 und eine zweite in Längsrichtung LR der Rahmentragstruktur 1 verlaufende Tragkonstruktion 20, die in Querrichtung QR der Rahmentragstruktur 1 voneinander beabstandet sind und als Rechteckhohlprofile ausgeführt sind. Die Rahmentragstruktur 1 umfasst ferner mehrere Querträger, z.B. einen hinteren Querträger 40 und einen vorderen Querträger 41, die ebenfalls als Rechteckhohlprofile ausgeführt sind.

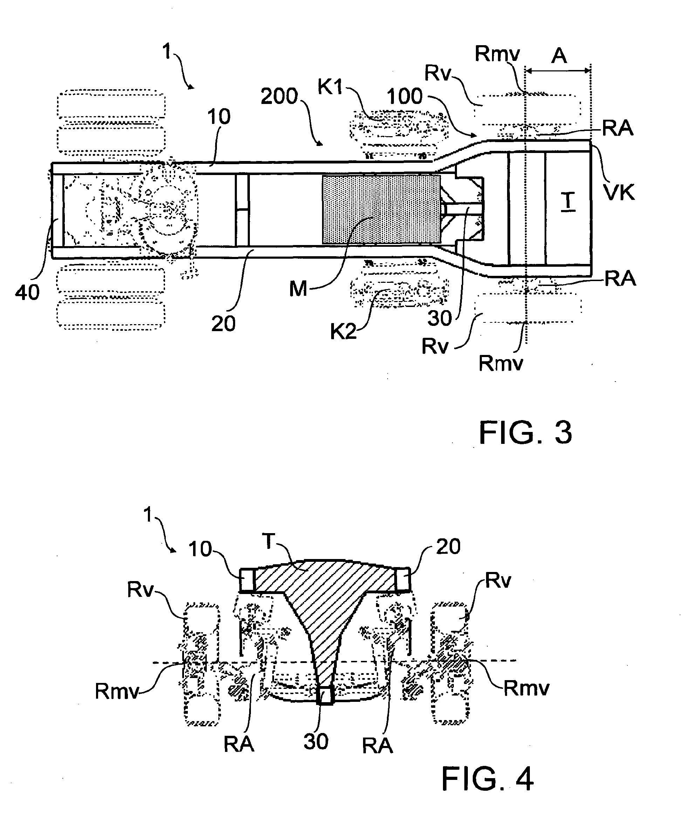

Die Rahmentragstruktur 1 ist zudem mit lenkbaren Vorderrädern Rv und einer Hinterachse mit Hinterrädern Rh versehen. Die Vorderräder Rv sind über Radaufhängungen RA mit der Rahmentragstruktur 1 verbunden. Die Radaufhängungen RA umfassen Festmachstellen für die Vorderräder Rv, wobei die Festmachstellen Radmittelpunkte Rmv umfassen, um die die Vorderräder Rv drehbar sind. Die Rahmentragstruktur 1 ist ferner mit einer Hinterachse und Hinterrädern Rh versehen, die Radmittelpunkte Rmh umfassen, um die sie drehbar. Die Hinterräder Rh sind zwillingsbereift, können aber auch einzelbereift ausgeführt werden. Ebenso ist es möglich, dass die Rahmentragstruktur 1 mit mehr als einer Hinterachse versehen wird. Die Rahmentragstruktur 1 kann zudem mit einer Motoreinrichtung M zum Antreiben des Nutzfahrzeugs (z.B. ein Dieselmotor - siehe Figur 3), ggf. weiteren Antriebsaggregaten, einem Antriebsstrang, etc. (nicht dargestellt) versehen werden.

Die erste Tragkonstruktion 10 und die zweite Tragkonstruktion 20 sind seitlich nach außen und nach oben geführt, um eine aufgeweitete und erhabene Tragstruktur 100 zu erzeugen, die zwischen den Vorderrädern Rv verläuft und sich über deren Radmittelpunkte Rmv nach vorne erstreckt und somit eine vordere Tragstruktur 100 darstellt. Die Tragstruktur 100 dient dazu, ein Fahrerhaus zu tragen (nicht dargestellt), das über der Tragstruktur 100 platziert wird. Das Fahrerhaus per se kann im Wesentlichen gemäß Stand der Technik ausgeführt sein und wie üblich über den Vorderrädern Rv angeordnet werden.

Die Rahmentragstruktur 1 umfasst ferner einen Kraftstofftank T, der einen im Wesentlichen horizontal ausgerichteten, im Wesentlichen hohlplattenförmigen Tankabschnitt aufweist, der zwischen der Tragstruktur 100 angeordnet ist und die erste Tragkonstruktion 10 mit der zweiten Tragkonstruktion 20 verbindet. Der horizontal ausgerichtete Tankabschnitt erstreckt sich zwischen den Vorderrädern Rv, ragt über deren Radmittelpunkte Rmv nach vorne hinaus und verläuft im Wesentlichen auf dem Niveau der ersten Tragkonstruktion 10 und der zweiten Tragkonstruktion 20. Der Kraftstofftank T, insbesondere der horizontale Tankabschnitt dient ebenfalls dazu, das Fahrerhaus zu tragen. Zudem kann der Kraftstofftank T als Unterbau, insbesondere Bodenplatte für das Fahrerhaus dienen.

Die erste Tragkonstruktion 10 und die zweite Tragkonstruktion 20 sind in eine Oberzugkonstruktion und eine Unterzugkonstruktion aufgeteilt, die heckseitig zusammengeführt sind und frontseitig mit dem Kraftstofftank T verbunden sind. Die Oberzugkonstruktion verläuft über dem Niveau der Radmittelpunkte Rmv und die Unterzugkonstruktion darunter.

Die erste Tragkonstruktion 10 und die zweite Tragkonstruktion 20 sind ferner nach seitlich innen geführt, um eine verschmälerte Tragstruktur 200 zu bilden, die sich zwischen dem die Vorderräder Rv umfassenden Vorderradaufbau und dem die Hinterräder Rv umfassenden Hinterradaufbau für das Nutzfahrzeug erstreckt und somit eine mittlere Tragstruktur 200 darstellt.

Die Rahmentragstruktur 1 umfasst außerdem eine Kühlanordnung, die baulich in einen Motorkühler K1 und einen Ladeluftkühler K2 aufgeteilt ist. Der Motorkühler K1 und der Ladeluftkühler K2 sind in Längsrichtung LR der Rahmentragstruktur 1 hinter den Radmittelpunkten Rmv der Vorderräder Rv angeordnet und seitlich voneinander separiert. Der Motorkühler K1 ist seitlich außen an der ersten Tragkonstruktion 10 angeordnet, während der Ladeluftkühler K2 seitlich außen an der zweiten Tragkonstruktion 20 angeordnet ist. Alternativ ist es auch möglich, die Kühlanordnung als kompakte, den Motorkühler K1 und den Ladeluftkühler K2 umfassende Baugruppe in Längsrichtung LR der Rahmentragstruktur 1 hinter den Radmittelpunkten Rmv der Vorderräder Rv und seitlich außen an der ersten Tragkonstruktion 10 oder der zweiten Tragkonstruktion 20 anzuordnen. Ebenso ist es möglich, sowohl den Motorkühler K1 als auch den Ladeluftkühler K2 seitlich außen an der ersten Tragkonstruktion 10 oder der zweiten Tragkonstruktion 20 anzuordnen.

Figur 1 ist außerdem zu entnehmen, dass die verschmälerte Tragstruktur 200 Raum schafft, der zur Aufnahme des Motorkühlers K1 und des Ladeluftkühlers K2 dient.

Figur 2 zeigt eine Seitenansicht der Rahmentragstruktur 1 der Figur 1. Figur 2 ist insbesondere ein Abstand A zu entnehmen, der sich zwischen den Radmittelpunkten Rmv der Vorderräder Rv und der Vorderkante VK der Rahmentragstruktur 1 in Längsrichtung LR der Rahmentragstruktur 1 erstreckt. Da im Gegensatz zum Stand der Technik die Kühlanordnung von der frontseitigen Position in Längsrichtung LR hinter die Radmittelpunkte Rmv der Vorderräder Rv versetzt wurde, entsteht Platz, der anderweitig genutzt werden kann.

Bei der in Figur 2 gezeigten Rahmentragkonstruktion 1 wird der frei gewordene Platz genutzt, um den die Radaufhängungen RA und die Vorderräder Rv umfassenden Vorderradaufbau für das Nutzfahrzeug nach vorne verschieben zu können. Dadurch kann der Abstand A verkleinert werden, was zu einer Vergrößerung des Abstands der Vorderräder Rv und der Hinterräder Rh in Längsrichtung LR führt, was wiederum zu einem verbesserten Wendekreis des Nutzfahrzeugs führt. Der Abstand A kann z.B. weniger als 800m betragen.

Figur 3 zeigt eine Draufsicht auf die Rahmentragstruktur 1 der Figuren 1 und 2. Figur 3 kann z.B. entnommen werden, dass die Motoreinrichtung M nicht wie meist üblich zwischen den Vorderrädern Rv angeordnet ist, sondern in Längsrichtung LR des Nutzfahrzeugs dahinter. Der Motorkühler K1 und der Ladeluftkühler K2 sind seitlich neben der Motoreinrichtung M angeordnet.

Der Motorkühler K1 und der Ladeluftkühler K2 können in Bezug auf die Längsrichtung LR der Rahmentragstruktur seitlich schräg nach außen ausgerichtet werden, um eine Vergrößerung der Fahrtluftaufnahme über zumindest eine Lufteintrittsdüse realisieren zu können. Alternativ oder ergänzend kann der Motorkühler K1 und der Ladeluftkühler K2 mit einer z.B. seitlich schräg nach außen ausgerichteten Lufteintrittsdüse ausgestattet sein, deren Einlassöffnung somit zumindest geringfügig nach vorne weist, wodurch wiederum eine Vergrößerung der Fahrtluftaufnahme realisiert werden kann.

Die Rahmentragstruktur 1 umfasst ferner eine dritte längsverlaufende Tragkonstruktion 30, die mittig zwischen der ersten Tragkonstruktion 10 und der zweiten Tragkonstruktion 20 verläuft und unter deren Niveau. Die dritte Tragkonstruktion 30 ist mit der ersten Tragkonstruktion 10 und der zweiten Tragkonstruktion 20 verbunden und kann z.B. mitunter dazu dienen, die Tankeinrichtung T und die Motoreinrichtung M zu tragen und Kräfte aus den Lenkerelementen der Radaufhängungen RA für die Vorderräder Rv aufzunehmen. Zu erwähnen ist, dass der Motorkühler K1 in Bezug auf die Längsrichtung LR der Rahmentragstruktur 1 z.B. auch vor den Radmittelpunkten Rmv der Vorderräder Rv angeordnet werden kann und der Ladeluftkühler K2 dahinter oder umgekehrt.

Außerdem ist zu erwähnen, dass die Kühlanordnung und somit der Motorkühler K1 und der Ladeluftkühler K2 in Bezug auf die Längsrichtung LR der Rahmentragstruktur 1 zumindest abschnittsweise hinter der Motoreinrichtung M angeordnet werden können.

Figur 4 zeigte eine Schnittansicht der Rahmentragstruktur 1 der Figuren 1 bis 3 in Längsrichtung LR nach vorne. Figur 4 ist insbesondere zu entnehmen, dass die dritte Tragkonstruktion 30 mit den Radaufhängungen RA der Vorderräder Rv verbunden ist und zwar insbesondere mit deren Lenkelementen (z.B. Quer-, Schräg- oder Längslenkerelemente). Figur 4 zeigt ferner, dass der Kraftstofftank T einen im Wesentlichen horizontalen Tankabschnitt und einen von dem Tankabschnitt nach unten erstreckenden Tankabschnitt umfasst, die eine im Wesentlichen T- oder V-förmige Gestalt bilden. Die erste Tragkonstruktion 10 und die zweite Tragkonstruktion 20 sind oben auf oberen Enden der Feder- und/oder Dämpferelemente der Radaufhängungen RA angeordnet und nehmen im Wesentlichen vertikal wirkende Kräfte aus den Feder- und/oder Dämpferelementen der Radaufhängungen RA auf.

Die Erfindung ist nicht auf die vorstehend beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

## Patentansprüche

1. Lastkraftwagen, mit einer Rahmentragstruktur (1),, mit:
- einer ersten längsverlaufenden Tragkonstruktion (10) und einer zweiten längsverlaufenden Tragkonstruktion (20), die in Querrichtung (QR) der Rahmentragstruktur (1) voneinander beabstandet sind,
- einer Kühlanordnung (K1, K2), die einen Motorkühler (K1) und einen Ladeluftkühler (K2) umfasst,
- Festmachstellen für Vorderräder (Rv) des Lastkraftwagens, wobei die Festmachstellen Radmittelpunkte (Rmv) umfassen, um die die Vorderräder (Rv) drehbar sind, und
- vorzugsweise einer Motoreinrichtung (M) zum Antreiben des Lastkraftwagens, **dadurch gekennzeichnet, dass**
- die erste Tragkonstruktion (10) und die zweite Tragkonstruktion (20) seitlich nach innen geführt sind, um eine verschmälerte Tragstruktur (200) zu erzeugen, die Raum schafft, der zur Aufnahme des Motorkühlers (K1) und/oder des Ladeluftkühlers (K2) dient,
- die Kühlanordnung (K1, K2) in Längsrichtung (LR) der Rahmentragstruktur (1) hinter den Radmittelpunkten (Rmv) angeordnet ist, und/oder
- die Kühlanordnung (K1, K2) seitlich an der Rahmentragstruktur (1) angeordnet ist.

2. Lastkraftwagen nach Anspruch 1, **dadurch gekennzeichnet, dass** die Kühlanordnung (K1, K2) baulich in einen Motorkühler (K1) und einen Ladeluftkühler (K2) aufgeteilt ist.

3. Lastkraftwagen nach Anspruch 1 oder 2, **dadurch gekennzeichnet, dass** die Kühlanordnung (K1, K2) seitlich außen an der ersten Tragkonstruktion (10) oder der zweiten Tragkonstruktion (20) angeordnet ist.

4. Lastkraftwagen nach einem der vorhergehenden Ansprüche, **dadurch gekennzeichnet, dass** der Motorkühler (K1) und der Ladeluftkühler (K2) seitlich voneinander separiert sind.

5. Lastkraftwagen nach einem der vorhergehenden Ansprüche, **dadurch gekennzeichnet, dass** der Motorkühler (K1) seitlich außen an der ersten Tragkonstruktion (10) und der Ladeluftkühler (K2) seitlich außen an der zweiten Tragkonstruktion (20) angeordnet ist.

6. Lastkraftwagen nach einem der vorhergehenden Ansprüche, **dadurch gekennzeichnet, dass** die Kühlanordnung (K1, K2) zumindest abschnittsweise seitlich neben der Motoreinrichtung (M) angeordnet ist.

7. Lastkraftwagen nach einem der vorhergehenden Ansprüche, **dadurch gekennzeichnet, dass** der Motorkühler (K1) in Bezug auf die Längsrichtung (LR) der Rahmentragstruktur (1) vor den Radmittelpunkten (Rmv) angeordnet ist und der Ladeluftkühler (K2) dahinter oder umgekehrt.

8. Lastkraftwagen nach einem der vorhergehenden Ansprüche, **dadurch gekennzeichnet, dass** die Kühlanordnung (K1, K2) in Bezug auf die Längsrichtung (LR) der Rahmentragstruktur (1) zumindest abschnittsweise hinter der Motoreinrichtung (M) angeordnet ist.

9. Lastkraftwagen nach einem der vorhergehenden Ansprüche, **dadurch gekennzeichnet, dass** die Kühlanordnung (K1, K2), der Motorkühler (K1) und/oder der Ladeluftkühler (K2) mit zumindest einer Lufteintrittsdüse, vorzugsweise einer NACA-Düse, versehen ist, deren Einlassöffnung zumindest geringfügig nach vorne weist, um zweckmäßig eine Vergrößerung der Fahrtluftaufnahme zu realisieren.

10. Lastkraftwagen nach einem der vorhergehenden Ansprüche, **dadurch gekennzeichnet, dass** die Kühlanordnung (K1, K2), der Motorkühler (K1) und/oder der Ladeluftkühler (K2) eine Schrägstellung relativ zu der Längsrichtung (LR) der Rahmentragstruktur (1) aufweisen, wodurch zweckmäßig eine Vergrößerung der Fahrtluftaufnahme über Lufteintrittsdüsen realisierbar ist.

11. Lastkraftwagen nach einem der vorhergehenden Ansprüche, **dadurch gekennzeichnet, dass** der Abstand (A) zwischen den Radmittelpunkten (Rmv) und der Vorderkante (VK) der Rahmentragstruktur (1) in Längsrichtung (LR) der Rahmentragstruktur (1) kleiner ist als ungefähr 1100mm, 1000mm, 900mm, 800mm, 700mm oder 600mm.

12. Lastkraftwagen nach einem der vorhergehenden Ansprüche, **dadurch gekennzeichnet, dass** der Lastkraftwagen eine Sattelzugmaschine ist.

## Claims

1. Lorry, having a support frame structure (1), with:
- a first longitudinally running support construction (10) and a second longitudinally running support construction (20) which are spaced apart from one another in the transverse direction (OR) of the support frame structure (1),
- a cooling arrangement (K1, K2) which comprises an engine radiator (K1) and a charge air cooler (K2),
- fixing points for front wheels (Rv) of the lorry, the fixing points comprising wheel centre points (Rmv), about which the front wheels (Rv) can be rotated, and
- preferably an engine device (M) for driving the lorry,
**characterized in that**
- the first support construction (10) and the second support construction (20) are guided laterally to the inside, in order to produce a narrowed support structure (200) which creates space which serves to receive the engine radiator (K1) and/or the charge air cooler (K2),
- the cooling arrangement (K1, K2) is arranged behind the wheel centre points (Rmv) in the longitudinal direction (LR) of the support frame structure (1), and/or
- the cooling arrangement (K1, K2) is arranged laterally on the support frame structure (1).

2. Lorry according to Claim 1, **characterized in that** the cooling arrangement (K1, K2) is divided structurally into an engine radiator (K1) and a charge air cooler (K2).

3. Lorry according to Claim 1 or 2, **characterized in that** the cooling arrangement (K1, K2) is arranged laterally on the outside of the first support construction (10) or the second support construction (20).

4. Lorry according to one of the preceding claims, **characterized in that** the engine radiator (K1) and the charge air cooler (K2) are separated laterally from one another.

5. Lorry according to one of the preceding claims, **characterized in that** the engine radiator (K1) is arranged laterally on the outside of the first support construction (10) and the charge air cooler (K2) is arranged laterally on the outside of the second support construction (20).

6. Lorry according to one of the preceding claims, **characterized in that** the cooling arrangement (K1, K2) is arranged at least in sections laterally next to the engine device (M).

7. Lorry according to one of the preceding claims, **characterized in that** the engine radiator (K1) is arranged in front of the wheel centre points (Rmv) and the charge air cooler (K2) is arranged behind them, or vice versa, in relation to the longitudinal direction (LR) of the support frame structure (1).

8. Lorry according to one of the preceding claims, **characterized in that** the cooling arrangement (K1, K2) is arranged at least in sections behind the engine device (M) in relation to the longitudinal direction (LR) of the support frame structure (1).

9. Lorry according to one of the preceding claims, **characterized in that** the cooling arrangement (K1, K2), the engine radiator (K1) and/or the charge air cooler (K2) are/is provided with at least one air inlet nozzle, preferably a NACA nozzle, the inlet opening of which points at least slightly to the front, in order expediently to realize an increase in the intake of travel-induced air.

10. Lorry according to one of the preceding claims, **characterized in that** the cooling arrangement (K1, K2), the engine radiator (K1) and/or the charge air cooler (K2) have/has an oblique position relative to the longitudinal direction (LR) of the support frame structure (1), as a result of which an increase in the intake of travel-induced air can expediently be realized via air inlet nozzles.

11. Lorry according to one of the preceding claims, **characterized in that** the spacing (A) between the wheel centre points (Rmv) and the front edge (VK) of the support frame structure (1) in the longitudinal direction (LR) of the support frame structure (1) is smaller than approximately 1100 mm, 1000 mm, 900 mm, 800 mm, 700 mm or 600 mm.

12. Lorry according to one of the preceding claims, **characterized in that** the lorry is a semitrailer tractor unit.

## Revendications

1. Véhicule poids-lourd, comprenant une structure de support de châssis (1) comprenant :
- une première construction de support (10) s'étendant longitudinalemant et une deuxième construction de support (20) s'étendant longitudinalement, lesquelles sont espacées l'une de l'autre dans la direction transversale (QR) de la structure de support de châssis (1),
- un agencement de refroidissement (K1, K2) qui comprend un radiateur de moteur (K1) et un refroidisseur d'air de suralimentation (K2),
- des zones de fixation pour des roues avant (Rv) du véhicule poids-lourd, les zones de fixation comprenant des centres de roue (Rmv) autour desquels les roues avant (Rv) peuvent tourner, et
- de préférence un dispositif de moteur (M) pour entraîner le véhicule
poids-lourd,
**caractérisé en ce que**
- la première construction de support (10) et la deuxième construction de support (20) sont guidées latéralement vers l'intérieur, afin de produire une structure de support rétrécie (200) qui fournit de la place servant à recevoir le radiateur de moteur (K1) et/ou le refroidisseur d'air de suralimentation (K2),
- l'agencement de refroidissement (K1, K2) est disposé dans la direction longitudinale (LR) de la structure de support de châssis (1) derrière les centres de roue (Rmv), et/ou
- l'agencement de refroidissement (K1, K2) est disposé latéralement au niveau de la structure de support de châssis (1).

2. Véhicule poids-lourd selon la revendication 1, **caractérisé en ce que** l'agencement de refroidissement (K1, K2) est divisé structurellement en un radiateur de moteur (K1) et un refroidisseur d'air de suralimentation (K2).

3. Véhicule poids-lourd selon la revendication 1 ou 2, **caractérisé en ce que** l'agencement de refroidissement (K1, K2) est disposé latéralement à l'extérieur au niveau de la première construction de support (10) ou de la deuxième construction de support (20).

4. Véhicule poids-lourd selon l'une quelconque des revendications précédentes, **caractérisé en ce que** le radiateur de moteur (K1) et le refroidisseur d'air de suralimentation (K2) sont séparés latéralement l'un de l'autre.

5. Véhicule poids-lourd selon l'une quelconque des revendications précédentes, **caractérisé en ce que** le radiateur de moteur (K1) est disposé latéralement à l'extérieur au niveau de la première construction de support (10) et le refroidisseur d'air de suralimentation (K2) est disposé latéralement à l'extérieur au niveau de la deuxième construction de support (20).

6. Véhicule poids-lourd selon l'une quelconque des revendications précédentes, **caractérisé en ce que** l'agencement de refroidissement (K1, K2) est disposé au moins en partie latéralement à côté du dispositif de moteur (M).

7. Véhicule poids-lourd selon l'une quelconque des revendications précédentes, **caractérisé en ce que** le radiateur de moteur (K1) est disposé par rapport à la direction longitudinale (LR) de la structure de support de châssis (1) avant les centres de roue (Rmv) et le refroidisseur d'air de suralimentation (K2) est disposé derrière ceux-ci ou inversement.

8. Véhicule poids-lourd selon l'une quelconque des revendications précédentes, **caractérisé en ce que** l'agencement de refroidissement (K1, K2) est disposé par rapport à la direction longitudinale (LR) de la structure
de support de châssis (1) au moins en partie derrière le dispositif de moteur (M).

9. Véhicule poids-lourd selon l'une quelconque des revendications précédentes, **caractérisé en ce que** l'agencement de refroidissement (K1, K2), le radiateur de moteur (K1) et/ou le refroidisseur d'air de suralimentation (K2) sont pourvus d'au moins une buse d'entrée d'air, de préférence une buse NACA, dont l'ouverture d'entrée est au moins légèrement tournée vers l'avant afin de réaliser de manière judicieuse une augmentation de l'apport d'air de conduite.

10. Véhicule poids-lourd selon l'une quelconque des revendications précédentes, **caractérisé en ce que** l'agencement de refroidissement (K1, K2), le radiateur de moteur (K1) et/ou le refroidisseur d'air de suralimentation (K2) présentent une position oblique par rapport à la direction longitudinale (LR) de la structure de support de châssis (1), de sorte que l'on puisse réaliser de manière judicieuse une augmentation de l'apport d'air de conduite par le biais de buses d'entrée d'air.

11. Véhicule poids-lourd selon l'une quelconque des revendications précédentes, **caractérisé en ce que** la distance (A) entre les centres de roue (Rmv) et l'arête avant (VK) de la structure de support de châssis (1) dans la direction longitudinale (LR) de la structure de support de châssis (1) est inférieure à environ 1100 mm, 1000 mm, 900 mm, 800 mm, 700 mm ou 600 mm.

12. Véhicule poids-lourd selon l'une quelconque des revendications précédentes, **caractérisé en ce que** le véhicule poids-lourd est un tracteur routier.
